# EUROPÄISCHE PATENTSCHRIFT

(11) **EP 3 887 850 B1**
(45) Veröffentlichungstag und Bekanntmachung des Hinweises auf die Patenterteilung: **04.12.2024**
(21) Anmeldenummer: 19801567.9
(22) Anmeldetag: 14.11.2019
(51) Int. Cl.: G01S 7/48, G01S 7/481, G01S 17/08, G01S 17/42, G01S 17/02, G01S 17/931, G01S 17/86, C08K 5/101

(54) **LIDAR-SENSORSYSTEM MIT VERBESSERTER OBERFLÄCHENGÜTE**
LIDAR SENSOR SYSTEM WITH IMPROVED SURFACE QUALITY
SYSTÈME DE CAPTEUR LIDAR À QUALITÉ DE SURFACE AMÉLIORÉE

(30) Priorität: 29.11.2018 EP 18209035
(43) Veröffentlichungstag der Anmeldung: 06.10.2021
(73) Patentinhaber: Covestro Deutschland AG, 51373 Leverkusen (DE)
(72) Erfinder: MEYER, Alexander, 40489 Düsseldorf (DE); OSER, Rafael, 47800 Krefeld (DE); KUHLMANN, Timo, 42799 Leichlingen (DE); CAPELLEN, Peter, 47803 Krefeld (DE)
(74) Vertreter: Levpat
(86) Internationale Anmeldenummer: PCT/EP2019/081256
(87) Internationale Veröffentlichungsnummer: WO 2020/109007

(56) Entgegenhaltungen:
- EP-A1- 0 552 680
- WO-A1-02/46298
- WO-A1-2018/197398
- WO-A2-02/082058
- "Polymer Engineering : Technologien und Praxis", 1 January 2008, SPRINGER, BERLIN, ISBN: 978-3-540-72402-5, article PETER EYERER ET AL: "Kapitel 2 Synthese (Herstellung, Erzeugung) von Kunststoffen", pages: 19 - 43, XP055591311, DOI: 10.1007/978-3-540-72419-3
- "Polymer Engineering : Technologien und Praxis", 1 January 2008, SPRINGER, BERLIN, ISBN: 978-3-540-72402-5, article PETER EYERER ET AL: "Kapitel 3 Eigenschaften von Kunststoffen in Bauteilen", pages: 44 - 210, XP009513498, DOI: 10.1007/978-3-540-72419-3

## Beschreibung

Die vorliegende Erfindung betrifft ein Sensor-System, umfassend eine LiDAR-Einheit mit einem Sender für Laserlicht mit einer Wellenlänge von 800 nm bis 1600 nm und einem Empfänger für Licht mit einer Wellenlänge von 800 nm bis 1600 nm und eine Abdeckung, welche so angeordnet ist, dass von der LiDAR-Einheit ausgesandtes und von ihr empfangenes IR-Licht durch die Abdeckung hindurch tritt. Die Erfindung betrifft ebenfalls ein Herstellungsverfahren für ein solches System, ein Fahrzeug, welches ein solches Sensor-System aufweist und die Verwendung eines thermoplastischen Materials zur Herstellung von Abdeckungen für LiDAR-Sensoren und/oder LiDAR-Empfängern.

Fahrerassistenzsysteme wie Notbremsassistenten, Spurassistenzsysteme, Verkehrszeichenerkennungssysteme, adaptive Geschwindigkeitssteuerungssysteme und Abstandshalter sind bekannt und werden in heutigen Fahrzeugen eingesetzt. Für die Umsetzung der genannten Funktionen werden Umgebungserfassungssensoren, die sich i.d.R. auf Radar-, LiDAR-, Ultraschall- und Kamerasensoren stützen, eingesetzt. Stereooptische Kamerasysteme sowie LiDAR-Sensoren sind insbesondere für hoch automatisiertes und autonomes Fahren wichtig, denn sie sind in der Lage, hochaufgelöste dreidimensionale Bilder der Fahrzeugumgebung vom Nah- bis Fernbereich zu liefern. Die in der vorliegenden Erfindung beschriebenen Substratmaterialien sind insbesondere für optische Kamerasysteme wie Mono- und Stereokamerasysteme und LiDAR-Sensoren geeignet. Ferner sind die Substratmaterialien für Radarsensoren geeignet.

Optische Kamerasysteme werden heute schon im Bereich der Fahrzeugsensorik, z.B. für Spurhalteassistenten, eingesetzt. Ein großer Vorteil der optischen Sensoren liegt darin, dass sie ein sehr genaues Abbild der Umgebung wiedergeben können, d.h. die Umgebung wird nicht punktuell erfasst, sondern großflächig abgebildet. Soll auch die Entfernung, z.B. zu einem vor dem Fahrzeug liegendem Gegenstand oder anderem Fahrzeug bestimmt werden, werden statt Monokameras mehrere Kameras wie Stereokameras eingesetzt. Statt eines rotierenden LiDAR-Systems können auch zwei oder weitere LiDAR-Sensoren eingesetzt werden. Durch Erfassung von mindestens zwei Bildern kann ein dreidimensionales Bild, z.B. über Triangulation berechnet werden. Mit einem derartigen Verfahren sind also auch Abstandsmessungen möglich. Systeme zur optischen Entfernungsmessung sind zwar sehr genau - die Genauigkeit nimmt aber mit dem Abstand zum jeweiligen Objekt ab. Als alleiniges Sensorsystem ist ein optisches Kamerasystem von den herrschenden Lichtverhältnissen abhängig. Bestimmte Lichtverhältnisse wie Gegenlicht, starke Sonneneinstrahlung, Dämmerung oder Dunkelheit können das Messergebnis stark negativ beeinflussen. Probleme können auch bei der Erfassung von Gegenständen auftreten, die keinen großen Kontrast oder Konturen zeigen. Hierbei kann es zu fehlerhaften Interpretationen des Umfelds kommen.

Aus diesen Gründen werden mehrere Sensorsysteme eingesetzt. So können digitale Kamerabilder mit den Informationen anderer Sensorsysteme wie Radar und vor allem LiDAR-Sensoren abgeglichen werden. Über die Zusammenfassung der Informationen kann die Software ein möglichst fehlerfreies Abbild der Umgebung erzeugen und mögliche Falscherkennungen einzelner Sensorsysteme korrigieren. Ein derart genaues Abbild der Umgebung zu erzeugen ist für autonome Fahrsysteme unabdingbar. Deshalb muss eine Abdeckung aus einem thermoplastischen Material gleichzeitig für mehrere Sensortypen geeignet sein; insbesondere ist es aus Designgründen wünschenswert, nicht mehrere Materialien einsetzen zu müssen, sondern die jeweilige Abdeckung aus einem Material realisieren zu können.

LiDAR (Abkürzung für engl. Light detection and ranging) oder auch LaDAR (Laser detection and ranging) ist eine dem Radar verwandte Methode zur optischen Abstands- und Geschwindigkeitsmessung. Statt der Radio- bzw. Mikrowellen beim Radar werden infrarote Laserstrahlen verwendet. Es gibt sehr unterschiedliche Typen von LiDAR-Systemen, die sich u.a. durch den horizontalen Erfassungsbereich (z.B. 70° bis zu 360°), den Lasertyp (z.B. scannender Dauerstrichlaser oder statischer Pulslaser) und die Sensortechnologie (z.B. mechanisch rotierender Spiegel oder Halbleiterelektronik) unterscheiden. Durch die vorliegende Erfindung werden auch dem LiDAR technisch verwandte Infrarotkameras abgedeckt, welche eine eigene Infrarotlichtquelle verwenden.

Auf thermoplastischem Material basierende Bauteile bieten für den Einsatz im Fahrzeugbereich viele Vorteile gegenüber herkömmlichen Materialien wie z.B. Glas. Hierzu zählen z.B. erhöhte Bruchsicherheit und/oder Gewichtsersparnis, die im Fall von Automobilen eine höhere Insassensicherheit bei Verkehrsunfällen und einen niedrigeren Kraftstoffverbrauch ermöglichen. Schließlich lassen Werkstoffe, die thermoplastische Polymere enthalten, aufgrund der einfacheren Formbarkeit eine wesentlich größere Designfreiheit zu.

Eine Abdeckung aus einem thermoplastischen Material soll dazu dienen, den LiDAR-Sensor und ein eventuell vorhandenes optische Kamerasystem zu verbergen und auch einen Schutz für die empfindliche Sensorelektronik darstellen.

Lidar-Sensoren und die Verwendung des Polycarbonats Makrolon 2405 mit der Farbformulierung 450601 sind in US 2012/0287417 A1 beschrieben. Weitere Polycarbonatanwendungen oder -zusammensetzungen, die Lidarsensorik betreffen, sind in WO 2018/197398 A1 beschrieben.

Polycarbonatzusammensetzungen mit Glycerinestern oder langkettigen Carbonsäureestern, jedoch ohne Pentaerythritolester sind im Stand der Technik bereits beschrieben. So offenbart WO 2010/090893 A1 im experimentellen Teil auf Seite 28, wie vor dem Hinzufügen von pulverförmigen Additiven und Extrudieren Polycarbonatpellets mit 400 ppm Loxiol 3820 besprüht werden.

US 2011/0129631 A1 offenbart im experimentellen Teil in Tabelle 1 Polycarbonatzusammensetzungen, welche unter anderem als Formtrennmittel "MRA-1" Loxiol 3820 enthalten. Loxiol 3820 wird in dieser Veröffentlichung als Octyldodecyl-Stearat identifiziert.

EP 2 810 978 A1 beschreibt in Beispiel 2, Absatz [0049], dass das Polycarbonat Makrolon 2600 zusammen mit einer Mischung aus Kohlenstoffnanoröhren (Baytubes C 150 P) und 2-Octyldocecyl-Stearat (Loxiol 3820) extrudiert wird.

EP 0 732 360 A1 offenbart im experimentellen Teil in Tabellen 1, 3 und 5 Polycarbonatzusammensetzungen mit Loxiol EP 218 ("E1", Glycerinstristearat), Loxiol EP 12 ("E2", Glycerinmonostearat), Loxiol EP 32 ("E3", Ester aus C₁₆-Alkohol mit Stearinsäure) und Loxiol EP 47 ("E4", Ester aus einem C₁₈-Alkohol mit Behensäure).

EP 0 205 192 A1 beschreibt im experimentellen Teil in Tabelle 1 Polycarbonatzusammensetzungen mit Resistat AF-101 ("B1", Partialester von C₁₈ - C₂₂-monobasischen Fettsäuren und Glycerin) und Rickemal S-100A ("B2", Stearyl-Monoglycerid).

Die vorliegende Erfindung hat sich die Aufgabe gestellt, ein Sensor-System bereitzustellen, dessen Abdeckung eine geringere Dämpfung des LiDAR-Signals aufweist. Dabei sollte die Abdeckung gute Entformungseigenschaften aufweisen, vor allem, wenn das Anwendungsfeld im Bereich zwei- oder dreidimensional geformter Abdeckscheiben für LiDAR-Sensoren liegt. Wenn die Entformungseigenschaften nicht ausreichen sollten, kann es durch Anhaftung oder Verkleben des Formteils zu Oberflächenstörungen kommen, die das LiDAR-Signal wiederum dämpfen. Da die Qualitätsanforderungen im Sensorbereich sehr hoch sind, gilt es, derartige Mängel zu verhindern.

Erfindungsgemäß gelöst wird die Aufgabe durch ein Sensor-System gemäß Anspruch 1 und ein Fahrzeug gemäß Anspruch 12. Die Erfindung betrifft ebenfalls ein Verfahren gemäß Anspruch 11 und eine Verwendung gemäß Anspruch 13. Vorteilhafte Weiterbildungen sind in den Unteransprüchen angegeben. Sie können beliebig kombiniert werden, sofern sich aus dem Kontext nicht eindeutig das Gegenteil ergibt.

Das Sensor-System umfasst:
- eine LiDAR-Einheit mit einem Sender für Laserlicht mit einer Wellenlänge von 800 nm bis 1600 nm und einem Empfänger für Licht mit einer Wellenlänge von 800 nm bis 1600 nm und
- eine Abdeckung, welche so angeordnet ist, dass von der LiDAR-Einheit ausgesandtes und von ihr empfangenes IR-Licht durch die Abdeckung hindurch tritt.

Die Abdeckung weist eine Schicht eines thermoplastischen Materials auf, wobei das thermoplastische Material ein transparentes thermoplastisches Polymer und einen Monoester einer Monocarbonsäure mit 15-20 C-Atomen mit Glycerin oder mit einem Monoalkohol mit ≥ 15 C-Atomen enthält.

Weiterhin gilt die Maßgabe, dass das thermoplastische Material frei von Mono-, Di-, Tri- und Tetraestern der Stearinsäure mit Pentaerythritol ist.

Es wurde überraschenderweise gefunden, dass bei einem Austausch der üblichen Pentaerythritol-basierten Entformer, insbesondere PETS, gegen die oben genannten Monoester gleichzeitig ein gutes Entformungsverhalten im Spritzguss und eine überlegene Oberflächengüte, das heißt eine geringere Dämpfung des LiDAR-Signals, erhalten werden können.

Der Begriff "frei von" bedeutet insbesondere, dass keine Mono-, Di-, Tri- und Tetraester der Stearinsäure mit Pentaerythritol bewusst hinzugefügt wurden. Ungewollte, aber technisch unvermeidliche Spuren/Verunreinigungen sind dann mit in dem Begriff "frei von" eingeschlossen.

Vorzugsweise ist das thermoplastische Material generell frei von Mono-, Di-, Tri- und Tetraestern des Pentaerythritols.

Die Abdeckung ist bevorzugt ein Formteil, das im Front- oder Heckbereich eines Fahrzeugs eingesetzt wird, z.B. ein Stoßfänger, Kühlergrill, Frontpanel oder ein Heckpanel, insbesondere ein Frontpanel für ein Kfz-Fahrzeug, kann aber ebenso ein Fahrzeugseitenteil sein. Die Abdeckung kann aber auch ebenso ein Dach oder Dachmodul für ein Kfz-Fahrzeug sein.

Es ist genauso möglich, dass die Abdeckung ein Formteil ist, welches im Inneren eines Fahrzeugs eingesetzt wird. Dann kann das erfindungsgemäße System zur Erkennung von Steuerungsgesten durch Insassen eines Fahrzeugs eingesetzt werden.

Die Abdeckung kann im Spritzgussverfahren hergestellt werden. Darüber hinaus weist insbesondere Polycarbonat auch sehr gute Eigenschaften wie eine hohe Wärmeformbeständigkeit und hohe Steifigkeit auf.

Der Abstand zwischen Abdeckung und LiDAR-Einheit kann zum Beispiel im Bereich von 1 cm bis 20 cm liegen.

Als "System" wird nicht nur im engen Sinne eines Paketes aus mechanisch verbundenen Einzelteilen, etwa wie eine Vorrichtung, verstanden, sondern auch breiter als bloße Kombination (lediglich) funktionell zu einer Einheit verbundener Einzelteile. Der LiDAR-Sender und -Empfänger können separat in das jeweilige Fahrzeug eingebracht werden und die Abdeckung für eine gewünschte Stelle im Fahrzeug, durch welche die Pulse des LiDAR-Sensors sollen, vorgesehen sein. Ebenso kann es sich aber um eine mechanisch verbundene Kombination handeln.

Die LiDAR-Einheit weist einen Sender für Laserlicht mit einer Wellenlänge von 800 nm bis 1600 nm auf. Entsprechend der Natur von Laserlicht ist hierbei nicht gemeint, dass der Sender Licht mit jeder Wellenlänge zwischen 800 nm und 1600 nm emittiert. Vielmehr genügt es, wenn Licht einer Wellenlänge, beispielsweise 905 nm, emittiert wird. Es ist auch möglich, dass eine Mehrzahl von Lasern mit unterschiedlichen Wellenlängen in dem genannten Bereich eingesetzt wird.

Der Empfänger ist üblicherweise schmalbandig auf das emittierte Laserlicht, beispielsweise 903 nm oder 905 nm, abgestimmt. Es ist auch möglich, dass der Empfänger auf ein breiteres Spektralfenster im Wellenlängenbereich von 800 nm bis 1600 oder schmalbandig auf eine Mehrzahl von Wellenlängen abgestimmt ist.

Das thermoplastische Material enthält ein transparentes thermoplastisches Polymer. "Transparent" im Sinne der vorliegenden Erfindung bedeutet, dass der Kunststoff eine Lichttransmission (in Anlehnung an ASTM 1003 bzw. ISO 13468; angegeben in % und Lichtart D65/100) von mindestens 6 %, weiter bevorzugt von mindestens 12 %, und besonders bevorzugt von mindestens 23 % aufweist. Weiterhin ist die Trübung (ASTM D1003: 2013) vorzugsweise kleiner als 3 %, weiter bevorzugt kleiner als 2,5 %, und besonders bevorzugt kleiner als 2,0 %.

Beispiele für geeignete Thermoplasten sind Polycarbonat einschließlich Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), Polyamid, cyclisches Polyolefm, Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS^{®}, ein Handelsprodukt der Firma Ticona).Hier und an anderer Stelle, wenn von "Polycarbonat" die Rede ist, ist vorzugsweise aromatisches Polycarbonat gemeint.

Das thermoplastische Material kann ferner übliche Additive wie Flammschutzmittel, Antistatika, UV-Absorber, Stabilisatoren und Antioxidantien enthalten. Geeignete Ultraviolett-Absorber sind Benzotriazole, Triazine, Benzophenone und/oder arylierte Cyanoacrylate. Als Stabilisatoren bevorzugt sind Phosphite und Phosphonite sowie Phosphine. Ferner können Alkylphosphate z. B. Mono-, Di- und Trihexylphosphat, Triisoctylphosphat und Trinonylphosphat eingesetzt werden. Als Antioxidantien können phenolische Antioxidantien wie alkylierte Monophenole, alkylierte Thioalkylphenole, Hydrochinone und alkylierte Hydrochinone eingesetzt werden.

Bevorzugt enthält das thermoplastische Material weniger als 0,1 Gew.-%, ganz besonders bevorzugt sind die Zusammensetzungen der Substratschicht frei von Streuadditiven, z.B. solchen auf Basis von Acrylat, Polyethylen, Polypropylen, Polystyrol, Glas, Aluminiumoxid und/oder Siliciumdioxid. Ferner enthält die Zusammensetzung besonders bevorzugt weniger als 0,1 Gew.-%, ganz besonders bevorzugt ist sie frei von Weißpigmenten o.ä. Pigmenten wie z.B. Titandioxid, Kaolin, Bariumsulfat, Zinksulfid, Aluminiumoxid, Aluminiumhydroxid, Quarzmehl, von Interferenzpigmenten und/oder Perlglanzpigmenten, d.h. plättchenförmigen Partikeln wie Glimmer, Graphit, Talk, SiOz, Kreide und/oder Titandioxid, beschichtet und/oder unbeschichtet.

Ferner enthält das thermoplastische Material bevorzugt weniger als 0,1 Gew.-%, ganz besonders bevorzugt ist die Zusammensetzung frei von nanopartikulären Systemen wie Metallpartikeln, Metalloxidpartikeln. Bevorzugt enthält die Zusammensetzung auch weniger als 0,1 Gew.-%, besonders bevorzugt ist sie frei von Pigmenten auf Basis von unlöslichen Pigmenten, wie sie z.B. in DE 10057165 A1 und in WO 2007/135032 A2 beschrieben sind.

Es ist weiterhin vorteilhaft, dass das thermoplastische Material 0 bis ≤ 0,0005 Gewichts-%, bezogen auf das Gesamtgewicht der Zusammensetzung, an Infrarot-Absorbern enthält. Vorzugsweise ist die Zusammensetzung frei von Infrarot-Absorbern. Dieses steht im Zusammenhang mit der Dämpfung des LiDAR-Signals durch Infrarot-Absorber im Polymer. Infrarot-Absorber sind insbesondere Ruß, LaB₆ und Moleküle mit Quaterylen-Struktur.

Als Monoester besonders geeignet sind Glycerinmonostearat und/oder 2-Octyldodecylstearat.

Bevorzugt enthält das thermoplastische Material keine weiteren Monoester als solche einer Monocarbonsäure mit ≥ 15 C-Atomen mit Glycerin oder mit einem Monoalkohol mit ≥ 15 C-Atomen.Gemäß einer weiteren Ausführungsform liegt der Monoester in einem Anteil von ≥ 0,01 Gew.-% bis ≤ 0,6 Gew.-%, bezogen auf das Gesamtgewicht des thermoplastischen Materials der beschriebenen Schicht der Abdeckung, vor. Weiter bevorzugt ist es, dass entsprechende Glycerinmonoester (zum Beispiel Glycerinmonostearat) in Anteilen von ≥ 0,01 Gew.-% bis ≤ 0,06 Gew.-% und/oder entsprechende Monoester einer Monocarbonsäure mit einem Monoalkohol mit ≥ 15 C-Atomen, zum Beispiel 2-Octyldodecylstearat, in Anteilen von ≥ 0,15 Gew.-% bis ≤ 0,6 Gew.-% vorliegen.

Gemäß einer weiteren Ausführungsform ist das thermoplastische Polymer ein Polycarbonat. Hierunter fallen Polycarbonat und Copolycarbonat. So kann das Polycarbonat ein aromatisches Polycarbonat mit einer Schmelzvolumenrate MVR von 8 bis 20 cm³/(10 min), bestimmt nach ISO 1133-1:2012-03 (300°C, 1,2 kg) sein.

Besonders bevorzugt ist in dem thermoplastischen Material als thermoplastisches Polymer lediglich aromatisches Polycarbonat enthalten.

Erfindungsgemäß besonders bevorzugte aromatische Polycarbonate als Komponente i) haben bevorzugt gewichtsmittlere Molekulargewichte Mw von 22000 bis 29000 g/mol, wobei aber grundsätzlich auch gewichtsmittlere Molekulargewichte Mw von 10000 bis 50000 g/mol, weiter bevorzugt von 14000 bis 40000 g/mol, besonders bevorzugt von 16000 bis 32000 g/mol geeignet wären. Hierbei werden die Werte Mw durch Gelpermeationschromotographie ermittelt, kalibriert gegen Bisphenol A-Polycarbonat Standards unter Verwendung von Dichlormethan als Elutionsmittel. Die Polycarbonate werden bevorzugt durch Reaktionen von Bisphenolverbindungen mit Kohlensäureverbindungen, insbesondere Phosgen, oder beim Schmelzeumesterungsprozess mit Diphenylcarbonat bzw. Dimethylcarbonat dargestellt.

Hierbei sind Homopolycarbonate auf Basis von Bisphenol-A und Copolycarbonate auf der Basis der Monomere Bisphenol-A und 1,1-Bis-(4-hydroxyphenyl)-3,3,5-trimethylcyclohexan, z.B. Apec^{®} der Covestro Deutschland AG, besonders bevorzugt.

Gemäß einer weiteren Ausführungsform dämpft die Abdeckung das LiDAR-Signal nur insoweit, als dass die Signalintensität von der LiDAR-Einheit ausgesandtem und von ihr wieder empfangenem IR-Licht (bestimmt durch Reflexion an einer glatten, mit TiO₂-haltiger weißer Farbe bestrichenen Fläche im Abstand von 3,2 m) ≥ 80% einer Referenz-Intensität, welche ohne die Abdeckung bestimmt wird, beträgt.

Gemäß einer weiteren Ausführungsform weist das thermoplastische Material einen Haftreibungskoeffizienten, bestimmt wie in EP 1 377 812 B1 beschrieben, von ≤ 0,37 auf. Bevorzugte Gleitreibungskoeffizienten, ebenfalls bestimmt wie in EP 1 377 812 B1 beschrieben, betragen ≤ 0,37.

Gemäß einer weiteren Ausführungsform weist das System weiterhin eine Kamera für sichtbares Licht mit einer Wellenlänge von 380 nm bis 780 nm auf, wobei von der Kamera empfangenes sichtbares Licht durch die Abdeckung hindurch tritt. Die Kamera nimmt Licht im Wellenlängenbereich von 380 nm bis 780 nm auf, wobei dieser Wellenlängenbereich nicht abschließend zu verstehen ist. Es ist möglich, dass dieser Wellenlängenbereich breiter ist, beispielsweise bis 800 nm, 900 nm, 1000 nm oder 1100 nm. Häufig haben Kameras für sichtbares Licht einen vorgeschalteten IR-Filter. Wird dieser entfernt, können bei einigen Modellen Bilder im Wellenlängenbereich bis 1100 nm aufgenommen werden. In einer weiteren Ausführungsform weist daher die Kamera keinen oder einen eingeschränkten Infrarot-Filter auf.

Die Kamera ist vorzugsweise eine Videokamera, um möglichst in Echtzeit dem Fahrassistenzsystem oder autonomen Fahrsystem des Fahrzeugs Informationen liefern zu können. Weiter bevorzugt ist die Kamera eine Stereo-Kamera.

Gemäß einer weiteren Ausführungsform weist die Abdeckung weiterhin eine Farbstoffe enthaltende Schicht auf und/oder es sind in dem thermoplastischen Material Farbmittel enthalten, so dass die Abdeckung eine Lichttransmission Ty im Bereich von 380 bis 780 nm von ≥ 3% bis ≤ 25%, bestimmt nach DIN ISO 13468-2:2006 (D65, 10°), aufweist, und es sich bei den Farbmitteln um mindestens ein grünes und/oder ein blaues Farbmittel sowie um mindestens ein rotes und/oder violettes Farbmittel handelt.

Durch diese Ausgestaltung erscheint die Abdeckung für den Betrachter dunkel bis schwarz und dahinterliegende elektronische Elemente wie Sensoren oder Kameras werden kaum oder gar nicht wahrgenommen. Dieses ist als "Black Panel"-Effekt bekannt und ermöglicht dem Automobildesigner größere Freiheiten beim Design von ästhetisch ansprechenden Automobil-Exterieurs. Die Farbmittel sind vorzugsweise solche, die im Infrarot-Bereich und insbesondere im Wellenlängenbereich des oder der LiDAR-Laser eine geringe oder keine Absorption zeigen.

Vorzugsweise weist die Abdeckung eine Transmission für Licht im Bereich von 380 nm bis 1100 nm von ≥ 40%, bestimmt nach DIN ISO 13468-2:2006 (in Anlehnung an diese Norm, Wellenlängenbereich wurde wie genannt verwendet), auf.

Die angegebenen Transmissionen verstehen sich als gemittelte Transmissionen (arithmetisches Mittel), gemittelt über alle Wellenlängen in dem betreffenden Bereich.

In einer Ausführungsform ist das grüne/blaue Farbmittel ausgewählt aus den Formeln (1), (2a-c), (3), (4a), (4b), (5), (6), (7) und/oder (8) und das rote/violette Farbmittel ist ausgewählt aus den Formeln (9), (10), (11), (12), (13), (14a), (14b) und/oder (15):

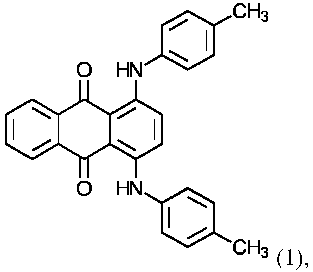

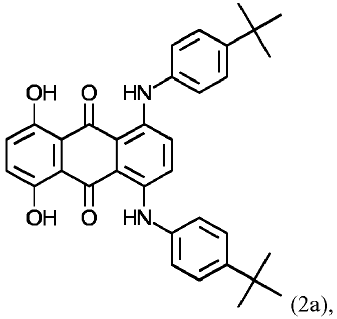

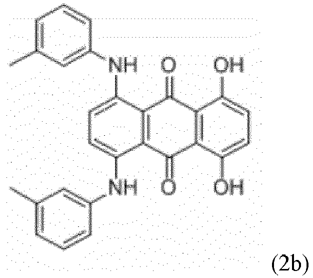

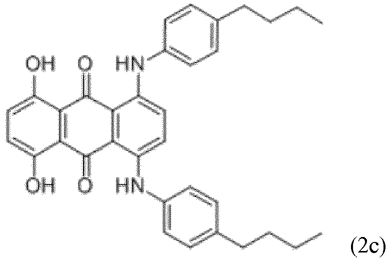

Das Farbmittel der Formel (1) ist unter dem Namen Macrolex Grün 5B der Firma Lanxess Deutschland GmbH bekannt, Color Index-Nummer 61565, CAS-Nummer: 128-90-3, und ist ein Anthrachinonfarbstoff.

Farbmittel der Formeln (2a), (2b) und (2c) sind unter anderem unter dem Namen Macrolex Grün G (Solvent Green 28) bekannt.

Blaue Farbmittel, die gemäß dieser Ausführungsform eingesetzt werden, sind Farbmittel der Formeln (3) und/oder (4a/4b) und/oder (SalSb): 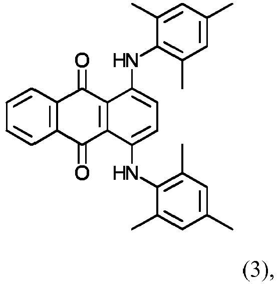 erhältlich unter dem Namen "Keyplast Blue KR", CAS-Nummer 116-75-6, 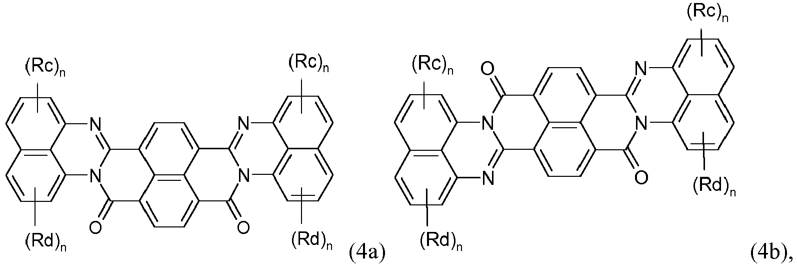 wobei
- Rc und Rd unabhängig voneinander für einen linearen oder verzweigten Alkylrest oder Halogen stehen, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl stehen,
- n unabhängig vom jeweiligen R für eine natürliche Zahl zwischen 0 und 3 steht, wobei der Rest für n=0 Wasserstoff ist.

In einer bevorzugten Ausführungsform sind Rc und/oder Rd Cl und stehen in o und/oder p-Positionen zu den Kohlenstoffatomen, welche die Aminfunktionalitäten tragen, wie z.B. diorthochlornapthalino-, di-ortho, mono-para-chlornaphthalino, sowie mono-orthonaphthalino. Ferner stellen in einer bevorzugten Ausführungsform Rc und Rd jeweils einen tert-Butylrest dar, welcher sich bevorzugt in meta-Position zu den Kohlenstoffatomen, welche die Stickstofffunktionalitäten tragen, befindet.

In einer besonders bevorzugten Ausführungsform ist in allen Ringen n=0, so dass alle Rc und Rd = H sind.

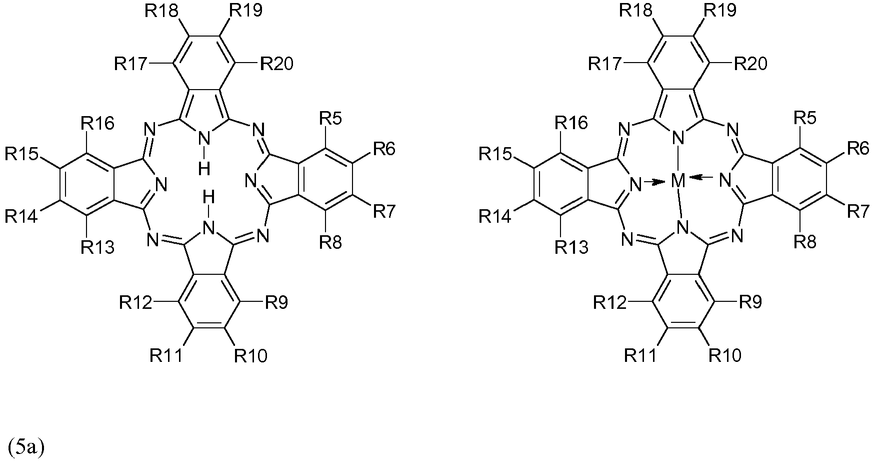

Die Reste R(5-20) sind jeweils unabhängig voneinander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon, CN.

Bevorzugt ist R(5-20) in allen Positionen gleich. Weiter bevorzugt ist R(5-20) in allen Positionen H. In einer alternativen Ausführungsform ist R(5-20) in allen Positionen Cl.

M ist bevorzugt Aluminium (mit R=H: Aluminiumphthalocyanin, CAS: 14154-42-8). Nickel (mit R=H: Nickelphthalocyanin, CAS: 14055-02-8), Cobalt (mit R=H: Kobaltphthalocyanin, CAS: 3317-67-7), Eisen (mit R=H: Eisenphthalocyanin, CAS: 132-16-1), Zink (mit R=H: Zinkphthalocyanin, CAS: 14320-04-08), Kupfer (mit R=H: Kupferphthalocyanin, CAS: 147-14-8; mit R=H und Cl: Polychlorkupferphthalocyanin, CAS: 1328-53-6; mit R=Cl: Hexadecachlorphthalocyanin, CAS: 28888-81-5; mit R=Br: Hexadecabromphthalocyanin, CAS: 28746-04-5), Mangan (mit R=H: Manganphthalocyanin, CAS: 14325-24-7).

Insbesondere bevorzugt ist die Kombination von M = Cu und R = H für alle Positionen. So ist eine Verbindung der Struktur (5b) mit M=Cu und R(5-20)=H als Heliogen^{®} Blau K 6911D oder Heliogen^{®} Blau K 7104 LW von der BASF AG, Ludwigshafen erhältlich.

Verbindungen der Struktur (5a) sind z.B. als Heliogen^{®} Blau L 7460 von der BASF AG, Ludwigshafen, erhältlich.

Ferner können als blaue Farbmittel eingesetzt werden:
Farbmittel der Formel (6), erhältlich unter dem Namen "Macrolex Blue 3R Gran" 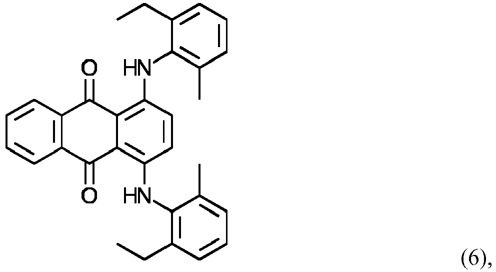 und/oder Farbmittel der Formel (7), erhältlich unter dem Namen "Macrolex Blue RR" (CAS 32724-62-2; Solvent Blue 97; C.I. 615290),

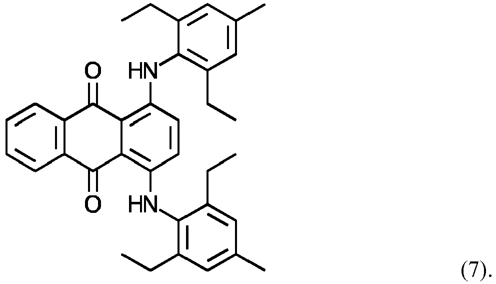

Ferner kann als blaues Farbmittel eingesetzt werden: 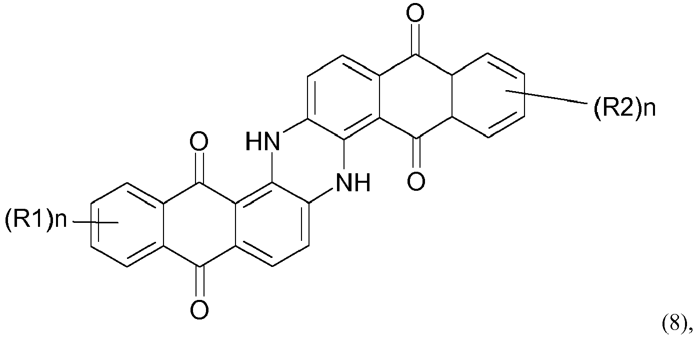 wobei
- R1 und R2 unabhängig voneinander für einen linearen oder verzweigten Alkylrest, oder Halogen stehen, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl stehen,
- n für eine natürliche Zahl zwischen 0 und 4 steht.

In einer besonders bevorzugten Ausführungsform ist in allen Ringen n=0, so dass alle R1 und R2 = H sind.

Farbmittel dieser Struktur (8) sind kommerziell erhältlich unter der Paliogen Blau Reihe der BASF AG.

Bei Verwendung von Farbmitteln der Struktur (8) sind insbesondere die Pigmente bevorzugt, die ein Schüttvolumen (bestimmt nach DIN ISO 787-11:1995-10) von 2 1/kg - 10 l/kg, bevorzugt 3 l/kg - 8 l/kg, eine spezifische Oberfläche (bestimmt nach DIN 66132:1975-07) von 5 m²/g - 60 m²/g, bevorzugt 10 m²/g - 55 m²/g, und einen pH-Wert (bestimmt nach DIN ISO 787-9) von 4 - 9 aufweisen.

Als rotes Farbmittel wird bevorzugt ein Farbmittel der Formel (9), erhältlich unter dem Namen "Macrolex Red 5B", mit der CAS-Nummer 81-39-0, eingesetzt:

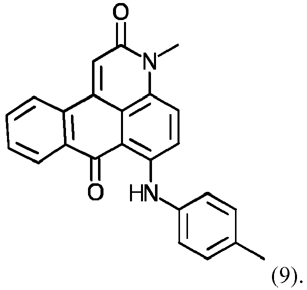

Weiterhin können Farbmittel der Formeln (10) mit der CAS-Nummer 20749-68-2 (auch: 71902-17-5) und (11) mit der CAS-Nummer 89106-94-5 eingesetzt werden:

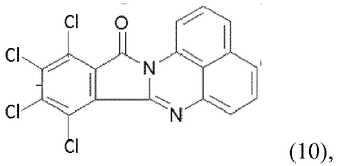

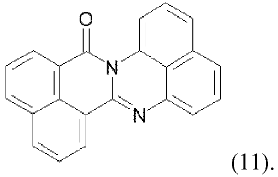

Als violette Farbmittel werden bevorzugt Farbmittel der Formeln (12) mit der CAS-Nummer 61951-89-1, (13), erhältlich unter dem Namen "Macrolex Violet B" von der Lanxess AG, mit der CAS-Nummer 81-48-1, oder (14a/14b) eingesetzt: 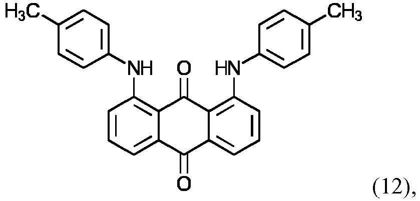 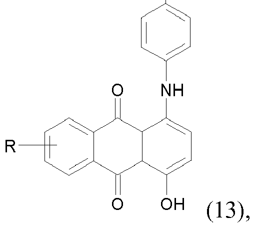 wobei R ausgewählt ist aus der Gruppe, die aus H und p-Methylphenylamin-Rest besteht; bevorzugt ist R = H; 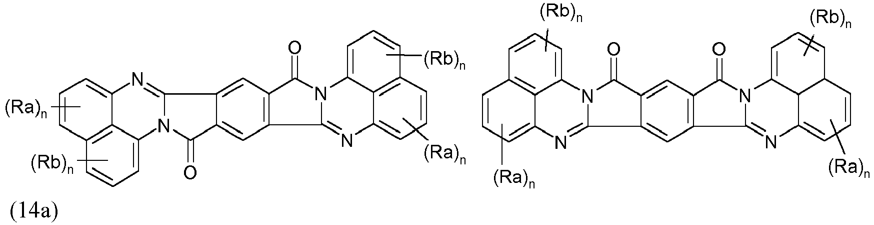 wobei
- Ra und Rb unabhängig voneinander für einen linearen oder verzweigten Alkylrest oder Halogen stehen, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl stehen,
- n unabhängig vom jeweiligen R für eine natürliche Zahl zwischen 0 und 3 steht, wobei der Rest für n=0 Wasserstoff ist.

In einer bevorzugten Ausführungsform sind Ra und/oder Rb Cl und stehen in o- und/oder p-Positionen zu den Kohlenstoffatomen, welche die Aminofunktionalitäten tragen, wie z.B. diorthochlornapthalino-, di-ortho, mono-para-chlornaphthalino, sowie mono-orthonaphthalino. Ferner stellen in einer bevorzugten Ausführungsform Ra und Rb jeweils einen tert.-Butylrest dar, welcher sich bevorzugt in meta-Position zu den Kohlenstoffatomen, welche die Stickstofffunktionalitäten tragen, befindet.

In einer besonders bevorzugten Ausführungsform ist in allen Ringen n=0, so dass alle Ra und Rb = H sind.

Ferner können Farbmittel eingesetzt werden, die der Formel (15), erhältlich unter dem Namen "Macrolex RedViolet R", CAS-Nummer 6408-72-6, entsprechen:

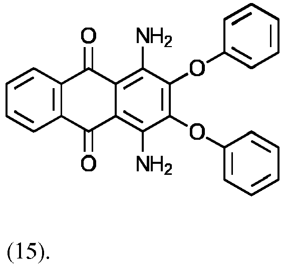

Gemäß einer weiteren Ausführungsform umfasst das thermoplastische Material die folgenden Komponenten:
- mindestens 99 Gew.-%, bezogen auf das Gesamtgewicht des Materials, aromatisches Polycarbonat mit einer Schmelzvolumenrate MVR von 15 bis 20 cm³/(10 min), bestimmt nach ISO 1133-1:2012-03 (300°C, 1,2 kg);
- Farbmittel der Formel (2a), (2b) und/oder (2c);
- Farbmittel der Formel (5b) mit M = Cu und R(5-20) = H;
- Farbmittel der Formel (10);
wobei die Summe der insgesamt eingesetzten Farbmittel ≥ 0,017 Gew.-% bis ≤ 0,057 Gew.-%, bezogen auf das Gesamtgewicht des Materials, beträgt.

Gemäß einer weiteren Ausführungsform umfasst das thermoplastische Material ein gelbes und/oder orangefarbenes Farbmittel der Formeln (16), (17), (18), (19), (20) oder eine Mischung aus mindestens zwei hiervon:

Als gelbe Farbmittel werden Farbmittel der Formeln (16), erhältlich unter dem Namen "Macrolex Gelb 3G" mit der CAS-Nummer 4702-90-3, und/oder (17), erhältlich unter dem Namen "Macrolex Orange 3G" (CAS-Nummer 6925-69-5, C.I. 564100), eingesetzt:

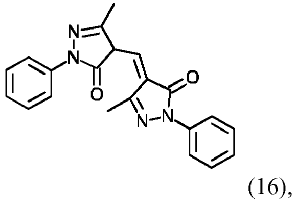

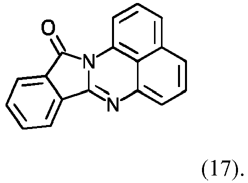

Ferner ist es möglich, Farbmittel der Formeln (18), erhältlich unter dem Namen "Oracet Yellow 180" mit der CAS-Nummer 13676-91-0, (19) mit der CAS-Nummer 30125-47-4 und/oder (20), erhältlich unter dem Namen "Oracet Orange 220; Solvent Orange 116" mit der CAS-Nummer 669005-94-1, einzusetzen.

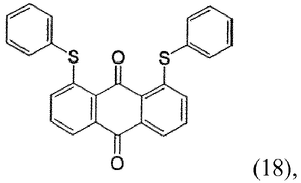

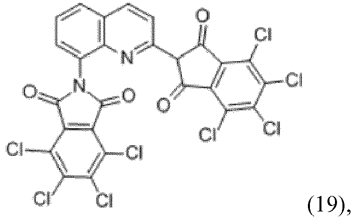

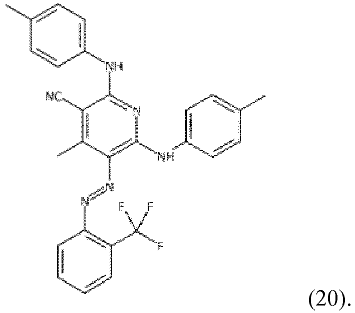

Grundsätzlich können aber neben den oben beschriebenen Farbmitteln ggf. zusätzlich weitere Farbmittel eingesetzt werden. Solche, die bevorzugt sind, sind Heliogen Grün Typen (wie z.B. Heliogen Grün K 8730; CAS 1328-53-6; Pigment Green 7; C.I. 74260).

Insbesondere bevorzugt sind Grün G (2a, b, c), Heliogen Grün sowie Heliogen Blau (5a, 5b), Paliogen Blau (8) in der einen Gruppe sowie Macrolex Rot EG (10) und Amaplast Violet PK (14a, 14 b) und M. Violet B (13) in der anderen Gruppe in Kombination mit gelben Farbmitteln.

Exemplarische Farbmittelkombinationen sind nachfolgend aufgeführt, wobei die Gew.-%-Angaben auf das Gesamtgewicht des thermoplastischen Materials bezogen sind und um ± 10% des angegebenen Wertes abweichen dürfen:
Macrolex Violett 3R (12) und Macrolex Grün 5B (1), jeweils 0,1 Gew.-% von beiden dieser Farbmittel;
Macrolex Red EG (10) 0,004 Gew.-%, Macrolex Violet 3R (12) 0,001 Gew.-% und Heliogen Blue K6911 [(5b) mit M=Cu und R(5-20)=H] 0,0024 Gew.-%;
Oracet Yellow 180 (18) 0,0004 Gew.-%, Macrolex Red EG (10) 0,0045 Gew.-% und Macrolex Green 5B (1) 0,0046 Gew.-%;
Macrolex Red EG (10) 0,0007 Gew.-%, Farbmittel der Struktur (14a) und/oder (14b) 0,0014 Gew.-% und Paliogen Blue L6385 (8) 0,0030 Gew.-%;
Farbmittel der Struktur (11) 0,0015 Gew.-% , Macrolex Violet B (13) 0,0012 Gew.-% und Heliogen Blue K6911 [(5b) mit M=Cu und R(5-20)=H] 0,0010 Gew.-% und
0,0018 Gew.-%, Macrolex Blue RR (7) 0,0032 Gew.-% und Macrolex Red EG (10) 0,0031 Gew.-%.

Gemäß einer weiteren Ausführungsform weist die Abdeckung weiterhin eine Decklackschicht auf. Dieses kann zur Verbesserung der Kratz- und Witterungsbeständigkeit dienen. Die hierfür besonders geeigneten Beschichtungssysteme, die beispielsweise für Polycarbonatplatten im Baubereich, für Scheinwerferabdeckscheiben aus Polycarbonat oder auch im Bereich der Polycarbonat-Automobilverscheibung verwendet werden, lassen sich grob in drei Kategorien einteilen:
(a) Thermisch härtende Beschichtungssysteme auf Basis eines Polysiloxanlackes, die sowohl einschichtig als auch mehrschichtig (mit einer lediglich haftvermittelnden Primerschicht zwischen Substrat und Polysiloxandecklack) sein können. Diese sind u. a. in US 4,278,804, US 4,373,061,US 4,410,594, US 5,041,313 und EP-A-1 087 001 beschrieben. Eine Variante ist die Verwendung des für den siloxanbasierten Decklack notwendigen Haftprimers als UV-Schutzprimer, indem dieser mit UV-Absorber versetzt und in einer höheren Schichtdicke appliziert wird.
(b) Thermisch härtende Mehrschichtsysteme mit einem UV-Schutzprimer und einem Decklack auf Basis eines Polysiloxanlackes. Geeignete Systeme sind bekannt z.B. aus US 5,391,795 und US 5,679,820.
(c) Ebenso können UV-härtende Beschichtungssysteme z.B. auf Acrylat-, Urethanacrylat oder Acrylsilanbasis, die gegebenenfalls Füllstoffe zur Verbesserung der Kratzfestigkeit beinhalten, aufgrund ihres größeren Applikationsschichtdickenfensters einen ausreichenden Witterungsschutz bilden. Solche Systeme sind bekannt und u.a. beschrieben in US 3,707,397 oder DE 69 71 7959, US 5,990,188, US 5,817,715, US 5,712,325 und WO 2014/100300.

In einer weiteren Ausführungsform ist der in der Decklackschicht verwendete Decklack ein mittels UV-Strahlung härtender Decklack, wie bereits zuvor unter Punkt c) beschrieben wurde.

In einer weiteren Ausführungsform enthält die Decklackschicht ein organo-modifiziertes Silan oder dessen Reaktionsprodukt.

Gemäß einer weiteren Ausführungsform liegt zwischen der Decklackschicht und dem thermoplastischen Material eine Haftvermittlerschicht (Primerschicht) vor. Bevorzugt ist eine Kombination eines haftvermittelnden UV-Schutzprimers auf der Basis von Polymethymethacrylat mit Dibenzoylresorcin als UV-Absorber und eines Polysiloxandecklacks mit silyliertem UV-Absorber. Beide Schichten, d.h. Primer und Decklack zusammen übernehmen hierbei die UV-Schutzausrüstung.

Gemäß einer weiteren Ausführungsform weist die Abdeckung weiterhin auf: eine Antireflexschicht, eine Antibeschlagschicht, eine Antistaubschicht, eine die Medienbeständigkeit verbessernde Schicht, eine die Kratzfestigkeit verbessernde Schicht oder deren Kombination. Beispielhaft für Antibeschlag- und Antidustbeschichtungen (Antistaubbeschichtungen) sind Schichten, die durch Flammsilikatisieren erhalten werden. Als Antireflexschichten gelten alle ein- oder mehrlagigen Schichtaufbauten, die als äußere Schicht eine niedrigbrechende Schicht aufweisen (nD <1,5). Auch die Verwendung des Außen verwendeten Lackes kann u.a. folgende Eigenschaften verbessern Medienbeständigkeit, Kratzfestigkeit, Verringerung der Reflexion (Antireflex) und leichte Antidust-Wirkung.

Das Verfahren zur Herstellung eines erfindungsgemäßen Systems umfasst die Schritte:
- Bereitstellen einer wenigstens teilweise im Spritzgussverfahren hergestellten Abdeckung, wie sie wie zuvor ausgeführt definiert ist;
- Bereitstellen einer LiDAR-Einheit mit einem Sender für Laserlicht mit einer Wellenlänge von 800 nm bis 1600 nm und einem Empfänger für Licht mit einer Wellenlänge von 800 nm bis 1600 nm;
- Anordnen der Abdeckung, so dass von der LiDAR-Einheit ausgesandtes und von ihr empfangenes IR-Licht durch die Abdeckung hindurch tritt.

Ein weiterer Aspekt der Erfindung ist ein Fahrzeug, umfassend ein erfindungsgemäßes System. Das System kann nicht nur an Kraftfahrzeugen, sondern ebenso an anderen Transport- und Fortbewegungsmitteln, wie Drohnen, Flugzeugen, Helikoptern oder Schienenfahrzeugen, angebracht sein, die erfindungsgemäß alle unter dem Begriff "Fahrzeuge" subsumiert werden. Mit eingeschlossen sind auch (teil)autonome Maschinen, die nicht unbedingt der Fortbewegung dienen, wie Roboter, Erntemaschinen und dergleichen.

Die Erfindung betrifft weiterhin die Verwendung eines thermoplastischen Materials zur Herstellung von Abdeckungen für LiDAR-Sensoren und/oder LiDAR-Empfängern, wobei das thermoplastische Material ein transparentes thermoplastisches Polymer und einen Monoester einer Monocarbonsäure mit ≥ 10 C-Atomen mit einem Alkohol mit ≥ 3 C-Atomen enthält und mit der Maßgabe, dass das thermoplastische Material frei von Mono-, Di-, Tri- und Tetraestern der Stearinsäure mit Pentaerythritol ist und wobei der Monoester ein Monoester einer Monocarbonsäure mit ≥ 15 C-Atomen mit Glycerin oder mit einem Monoalkohol mit ≥ 15 C-Atomen ist.

Gemäß einer Ausführungsform der Verwendung ist das thermoplastische Polymer ein aromatisches Polycarbonat. Zu weiteren Ausführungsformen und Definitionen wird zur Vermeidung von Wiederholungen auf die Ausführungen zum erfindungsgemäßen System verwiesen. Diese sind genauso auf die erfindungsgemäße Verwendung anwendbar.

### Beispiele

Die vorliegende Erfindung wird anhand der nachfolgenden Beispiele näher erläutert, ohne jedoch darauf beschränkt zu sein. Die hier beschriebenen Bestimmungsmethoden kommen für alle korrespondierenden Größen in der vorliegenden Erfindungsbeschreibung zur Anwendung, sofern nichts Gegenteiliges beschrieben worden ist.

### Komponenten

**PC-1:** Lineares Bisphenol-A-Homopolycarbonat mit Endgruppen basierend auf Phenol mit einer Schmelze-Volumenrate MVR von 19 cm³/10 min (gemessen bei 300 °C und 1,2 kg Belastung gemäß ISO 1133-1:2011),
**PC-2:** Lineares Bisphenol-A-Homopolycarbonat mit Endgruppen basierend auf Phenol mit einer Schmelze-Volumenrate MVR von 12 cm³/10 min (gemessen bei 300 °C und 1,2 kg Belastung gemäß ISO 1133-1:2011),
**PC-3:** Lineares Bisphenol-A-Homopolycarbonat mit Endgruppen basierend auf Phenol mit einer Schmelze-Volumenrate MVR von 6 cm³/10 min (gemessen bei 300 °C und 1,2 kg Belastung gemäß ISO 1133-1:2011),

**A:** Pentaerythrittetrastearat, CAS 115-83-3 (Glycolube P der Firma Lonza GmbH Deutschland),
**B:** Glycerinmonostearat, CAS 31566-31-1 (Dimodan Hab Veg der Firma Danisco Deutschland GmbH, Deutschland),
**C:** 2-Octyldodecylstearat, CAS 22766-82-1 (Loxiol 3820 der Firma Emery Oleochemicals Europe, Düsseldorf, Germany),
**D:** Pentaerythritdistearat, CAS 13081-97-5 (Struktol VPEDS der Firma Struktol Company of America; Ohio USA).

### Compoundierung

Die Compoundierung der Materialien erfolgte auf einem Zweiwellenextruder der Firma KraussMaffei Berstorff, TYP ZE25, bei einer Gehäusetemperatur von 260 °C beziehungsweise einer Massetemperatur von ca. 280 °C und einer Drehzahl von 100 Upm. Die Additive A bis D wurden in den unten angegebenen Mengen zusammen mit pulverförmigem Polycarbonat PC-3 vermischt und dann gemeinsam mit den Polycarbonaten PC-1 oder PC-2 compoundiert.

### Messung der LiDAR-Signalstärke

Zur Reduktion der Streulichtsignale wurde der Sensorkopf des LiDAR-Sensors auf der messwegabgewandten Seite abgeschirmt. Es wurden nur Laser 1, 3, 5, 7, 8, 10, 12, 14 verwendet. Außerdem wurde das Field-Of-View (FOV) des Sensors im Sensor-Interface auf 20° (350°-10°) begrenzt. Als Reflexionsfläche diente eine glatte, mit TiO₂-haltiger Farbe gestrichene weiße Fläche. Die Wand befand sich 3,2 m vom Lidarsensor entfernt.

Die Prüfmuster wurden mittels eines Probenhalters parallel zum LIDAR getestet, wobei die Proben-Rückseite ca.15 mm vor dem LiDAR-Sensor lag, so dass sowohl das Ausgangssignal als auch das zurückgeworfene Eingangssignal durch die Wanddicke der Prüfplatte dringen musste Die Auswertung wurde mit der Software "VeloView" vom Hersteller des LiDAR-Sensors Velodyne durchgeführt. Es wurde der Mittelwert der gemessenen Intensitäten einer Probe bestimmt. Dieser Proben-Mittelwert wurde durch den Mittelwert der Referenzmessung (Luft) geteilt, um so die relative Intensität zu bestimmen.

Die gemessenen Intensitäten des wieder aufgenommenen Lasersignals lagen zwischen 0% und 100%. Je geringer die Dämpfung (Abschwächung) des Signals ist, also umso höher die Intensität des gemessenen Signals ist, desto geeigneter wird die Abdeckung für LiDARgestützte Sensoranwendungen im Automobilbereich eingestuft. Die in den Beispielen gemessenen Intensitäten sind in der Spalte "LIDAR-Signal bez. auf Luftwert in %" dokumentiert.

### Messung der Haftreibung

Die Reibungskoeffizienten wurden unter Verwendung einer modifizierten Spritzgießmaschine vom Typ Arburg-370S-800-150 bestimmt. Das Verfahren ist beschrieben in EP 1 377 812 B1. Haftreibung ist die Reibzahl, die aus der notwendigen Kraft abgeleitet wird, um relativ zueinander ruhende Körper (Stempel/Prüfkörper) in Bewegung zu setzen (Schwellenwert).

Der Haftreibungskoeffizient ist wie folgt definiert: F_{R} = µ x F_{N} oder, nach µ umgestellt, µ = F_{R}/F_{N} (F_{N} = Normalkraft, F_{R} = Reibkraft, µ = Reibungskoeffizient).

Bei Kreisbewegung gilt folgender Zusammenhang: F_{R} = M_{d}/rₘ (M_{d} = Drehmoment, rₘ = mittlerer Radius der Reibfläche (Ringfläche)) und M_{d}/rₘ = µ x F_{N} und, nach µ umgestellt, µ = M_{d}/(rₘ x F_{N}).

In einem Reibungskoeffizientenwerkzeug wurde ein scheibenförmiger Probekörper mit einem Außendurchmesser von 92 mm und einer Dicke von 2,6 mm hergestellt. Dieser besaß am äußeren Rand einen 5 mm hohen und 3 mm breiten Steg, an dem sich flache Vertiefungen, vergleichbar zu einer Zahnriemenscheibe, befanden, wodurch das Drehmoment vom Werkzeug auf den Prüfkörper übertragen wird.

Es erlaubt die direkte Ermittlung des Haftreibungskoeffizienten an einem scheibenförmigen Prüfkörper unmittelbar nach dessen Erstarrung. Hierbei gilt die Beziehung, dass die Reibkraft proportional dem Drehmoment ist. Beim Öffnen des Werkzeugs fährt ein mit einem Drehmomentaufnehmer verbundener Stempel mit einer definierten Normalkraft F_{N} gegen das Formteil (Reibpartner). Auf der anderen Formteilseite wird der Prüfkörper gehalten und in Rotation versetzt. Dabei wird mittels des am Stempel gemessenen Drehmoments der Haftreibungskoeffizient zwischen Stempel und Prüfkörper ermittelt. Da die Reibung durch die Unebenheit der aufeinander gleitenden Flächen verursacht wird (verhaken), wurde der Stempel mit einer mittleren Oberflächenrauigkeit Ra = 0,05 µm ausgeführt.

Die Materialien wurden auf einer Spritzgießmaschine aufgeschmolzen und bei einer Schmelzetemperatur von 280 °C in das geschlossene Reibungskoeffizientenwerkzeug mit einer Werkzeugwandtemperatur von 80 °C eingespritzt und unter Nachdruck mit 550 bar 15 s lang gehalten. Nach einer Restkühlzeit von 20 s wurde das Werkzeug geringfügig geöffnet und die Haft- und Gleitreibungskoeffizienten bestimmt.

Die Ergebnisse sind in der nachfolgenden Tabelle aufgeführt. Mit "V" gekennzeichnete Beispiele sind Vergleichsbeispiele und mit "E" gekennzeichnete Beispiele sind erfindungsgemäß.

| | **1V** | **2V** | **3V** | **4E** | **5E** | **6E** | **7E** | **8V** | **9V** | **10V** | **11E** |
|---|---|---|---|---|---|---|---|---|---|---|---|
| **Zusammensetzung [Gew.-%]** | | | | | | | | | | | |
| PC-1 | 95 | 95 | 95 | 95 | 95 | 95 | 95 | 95 | 95 | | |
| PC-2 | | | | | | | | | | 95 | 95 |
| PC-3 | 4,8 | 4,7 | 4,6 | 4,98 | 4,96 | 4,85 | 4,7 | 4,97 | 4,96 | 4,6 | 4,96 |
| A | 0,2 | 0,3 | 0,4 | | | | | | | 0,4 | |
| B | | | | 0,02 | 0,04 | | | | | | 0,04 |
| C | | | | | | 0,15 | 0,3 | | | | |
| D | | | | | | | | 0,03 | 0,04 | | |

| **Ergebnisse** | | | | | | | | | | | |
|---|---|---|---|---|---|---|---|---|---|---|---|
| LiDAR-Signalstärke [%] | 78,7 | 78,4 | 73,7 | 80,8 | 80,2 | 82,6 | 80,7 | 81,9 | 82,6 | 78,4 | 80,4 |
| Haftreibungskoeffizient | 0,32 | 0,29 | 0,27 | 0,37 | 0,33 | 0,29 | 0,25 | 0,44 | 0,43 | 0,27 | 0,27 |
| Gleitreibungskoeffizient | 0,35 | 0,33 | 0,30 | 0,37 | 0,34 | 0,31 | 0,25 | 0,44 | 0,43 | 0,30 | 0,27 |

Man erkennt, dass nur die erfindungsgemäßen Zusammensetzungen gleichzeitig eine hohe Restsignalstärke und die erforderliche Entformungswirkung, dargestellt als Gleit- und Haftreibungskoeffizienten, liefern. Zusammensetzungen mit anderen Entformern wiesen nicht die gewünschte Eigenschaftskombination auf.

## Patentansprüche

1. Sensor-System, umfassend
- eine LiDAR-Einheit mit einem Sender für Laserlicht mit einer Wellenlänge von 800 nm bis 1600 nm und einem Empfänger für Licht mit einer Wellenlänge von 800 nm bis 1600 nm und
- eine Abdeckung, welche so angeordnet ist, dass von der LiDAR-Einheit ausgesandtes und von ihr empfangenes IR-Licht durch die Abdeckung hindurchtritt,
**dadurch gekennzeichnet, dass**
die Abdeckung eine Schicht eines thermoplastischen Materials aufweist, wobei das thermoplastische Material ein transparentes thermoplastisches Polymer und einen Monoester einer Monocarbonsäure mit ≥ 10 C-Atomen mit einem Alkohol mit ≥ 3 C-Atomen enthält, wobei der Monoester ein Monoester einer Monocarbonsäure mit 15 bis 20 C-Atomen mit Glycerin oder mit einem Monoalkohol mit ≥ 15 C-Atomen ist,
mit der Maßgabe, dass das thermoplastische Material frei von Mono-, Di-, Tri- und Tetraestern der Stearinsäure mit Pentaerythritol ist.

2. System gemäß Anspruch 1, wobei der Monoester in einem Anteil von ≥ 0,01 Gew.-% bis ≤ 0,6 Gew.-%, bezogen auf das Gesamtgewicht des thermoplastischen Materials, vorliegt.

3. System gemäß einem der vorhergehenden Ansprüche, wobei das transparente thermoplastische Polymer ein aromatisches Polycarbonat ist.

4. System gemäß einem der vorhergehenden Ansprüche, wobei die Abdeckung das LiDAR-Signal nur insoweit dämpft, als dass die Signalintensität von von der LiDAR-Einheit ausgesandtem und von ihr wieder empfangenem IR-Licht, bestimmt durch Reflexion an einer glatten, mit TiO₂-haltiger weißer Farbe bestrichenen Fläche im Abstand von 3,2 m, ≥ 80% einer Referenz-Intensität, welche ohne die Abdeckung bestimmt wird, beträgt.

5. System gemäß einem der vorhergehenden Ansprüche, wobei das thermoplastische Material einen Haftreibungskoeffizienten, bestimmt wie in EP 1 377 812 B1 beschrieben, von ≤ 0,37 aufweist.

6. System gemäß einem der vorhergehenden Ansprüche, weiterhin aufweisend eine Kamera für sichtbares Licht mit einer Wellenlänge von 380 nm bis 780 nm, wobei von der Kamera empfangenes sichtbares Licht durch die Abdeckung hindurchtritt.

7. System gemäß einem der vorhergehenden Ansprüche, wobei die Abdeckung weiterhin eine Farbstoffe enthaltende Schicht aufweist und/oder in dem thermoplastischen Material Farbmittel enthalten sind, so dass die Abdeckung eine Lichttransmission Ty im Bereich von 380 bis 780 nm von ≥ 3% bis ≤ 25%, bestimmt nach DIN ISO 13468-2:2006 (D65, 10°), aufweist, und es sich bei den Farbmitteln um mindestens ein grünes und/oder ein blaues Farbmittel sowie um mindestens ein rotes und/oder violettes Farbmittel handelt.

8. System gemäß einem der vorhergehenden Ansprüche, wobei die Abdeckung weiterhin eine Decklackschicht aufweist.

9. System gemäß Anspruch 9, wobei zwischen der Decklackschicht und dem thermoplastischen Material eine Haftvermittlerschicht vorliegt.

10. System gemäß einem der vorhergehenden Ansprüche, wobei das thermoplastische Material der in Anspruch 1 beschriebenen Schicht als transparentes thermoplastisches Polymer nur aromatisches Polycarbonat und keine weiteren Monoester von Monocarbonsäuren als die genannten enthält.

11. Verfahren zur Herstellung eines Systems gemäß einem der vorhergehenden Ansprüche, umfassend die Schritte:
- Bereitstellen einer wenigstens teilweise im Spritzgussverfahren hergestellten Abdeckung, wie sie in einem der vorhergehenden Ansprüche definiert ist;
- Bereitstellen einer LiDAR-Einheit mit einem Sender für Laserlicht mit einer Wellenlänge von 800 nm bis 1600 nm und einem Empfänger für Licht mit einer Wellenlänge von 800 nm bis 1600 nm;
- Anordnen der Abdeckung, so dass von der LiDAR-Einheit ausgesandtes und von ihr empfangenes IR-Licht durch die Abdeckung hindurch tritt.

12. Fahrzeug, umfassend ein System gemäß einem der Ansprüche 1 bis 10.

13. Verwendung eines thermoplastischen Materials zur Herstellung von Abdeckungen für LiDAR-Sensoren und/oder LiDAR-Empfängern,
**dadurch gekennzeichnet, dass**
das thermoplastische Material ein transparentes thermoplastisches Polymer und einen Monoester einer Monocarbonsäure mit ≥ 10 C-Atomen mit einem Alkohol mit ≥ 3 C-Atomen enthält,
mit der Maßgabe, dass das thermoplastische Material frei von Mono-, Di-, Tri- und Tetraestern der Stearinsäure mit Pentaerythritol ist und wobei der Monoester ein Monoester einer Monocarbonsäure mit 15-20 C-Atomen mit Glycerin oder mit einem Monoalkohol mit ≥ 15 C-Atomen ist.

14. Verwendung gemäß Anspruch 13, wobei das transparente thermoplastische Polymer ein aromatisches Polycarbonat ist.

## Claims

1. Sensor system comprising
- a LiDAR unit having a transmitter for laser light having a wavelength of 800 nm to 1600 nm and a receiver for light having a wavelength of 800 nm to 1600 nm and
- a cover arranged such that IR light transmitted by the LiDAR unit and received thereby passes through the cover,
**characterized in that**
the cover comprises a layer of a thermoplastic material, wherein the thermoplastic material contains a transparent thermoplastic polymer and a monoester of a monocarboxylic acid having ≥ 10 C atoms with an alcohol having ≥ 3 C atoms, wherein the monoester is a monoester of a monocarboxylic acid having 15 to 20 C atoms with glycerol or with a monoalcohol having ≥ 15 C atoms,
with the proviso that the thermoplastic material is free from mono-, di-, tri- and tetraesters of stearic acid with pentaerythritol.

2. System according to Claim 1, wherein the monoester is present in a proportion of ≥ 0.01% by weight to ≤ 0.6% by weight based on the total weight of the thermoplastic material.

3. System according to either of the preceding claims, wherein the transparent thermoplastic polymer is an aromatic polycarbonate.

4. System according to any of the preceding claims, wherein the cover attenuates the LiDAR signal only to the extent that the signal intensity of IR light transmitted by the LiDAR unit and received again thereby, determined by reflection from a smooth surface painted with TiO₂-containing white paint at a distance of 3.2 m, is ≥ 80% of a reference intensity determined without the cover.

5. System according to any of the preceding claims, wherein the thermoplastic material has a coefficient of static friction, determined as described in EP 1 377 812 B1, of ≤ 0.37.

6. System according to any of the preceding claims, further comprising a camera for visible light having a wavelength of 380 nm to 780 nm, wherein visible light received by the camera passes through the cover.

7. System according to any of the preceding claims, wherein the cover further comprises a layer containing dyes and/or the thermoplastic material contains colourants with the result that the cover has a light transmission Ty in the range of 380 to 780 nm from ≥ 3% to ≤ 25% determined according to DIN ISO 13468-2:2006 (D65, 10°) and the colourants comprise at least one green and/or blue colourant and at least one red and/or purple colourant.

8. System according to any of the preceding claims, wherein the cover further comprises a topcoat layer.

9. System according to Claim 9, wherein an adhesion promoter layer is present between the topcoat layer and the thermoplastic material.

10. System according to any of the preceding claims, wherein the thermoplastic material of the layer described in Claim 1 contains only aromatic polycarbonate as the transparent thermoplastic polymer and no monoesters of monocarboxylic acids other than those mentioned.

11. Process for producing a system according to any of the preceding claims comprising the steps of:
- providing a cover as defined in any of the preceding claims at least partially produced by injection moulding;
- providing a LiDAR unit having a transmitter for laser light having a wavelength of 800 nm to 1600 nm and a receiver for light having a wavelength of 800 nm to 1600 nm;
- arranging the cover such that IR light transmitted by the LiDAR unit and received thereby passes through the cover.

12. Vehicle comprising a system according to any of Claims 1 to 10.

13. Use of a thermoplastic material for producing covers for LiDAR sensors and/or LiDAR receivers,
**characterized in that**
the thermoplastic material contains a transparent thermoplastic polymer and a monoester of a monocarboxylic acid having ≥ 10 C atoms with an alcohol having ≥ 3 C atoms,
with the proviso that the thermoplastic material is free from mono-, di-, tri- and tetraesters of stearic acid with pentaerythritol and wherein the monoester is a monoester of a monocarboxylic acid having 15-20 C atoms with glycerol or with a monoalcohol having ≥ 15 C atoms.

14. Use according to Claim 13, wherein the transparent thermoplastic polymer is an aromatic polycarbonate.

## Revendications

1. Système de capteur, comprenant
- une unité LiDAR pourvue d'un émetteur pour une lumière laser d'une longueur d'onde de 800 nm à 1600 nm et d'un récepteur pour de la lumière d'une longueur d'onde de 800 nm à 1600 nm et
- un recouvrement, qui est agencé de telle sorte que la lumière IR émise par l'unité LiDAR et reçue par celle-ci traverse le recouvrement,
**caractérisé en ce que**
le recouvrement présente une couche d'un matériau thermoplastique, le matériau thermoplastique contenant un polymère thermoplastique transparent et un monoester d'un acide monocarboxylique comprenant ≥ 10 atomes de carbone avec un alcool comprenant ≥ 3 atomes de carbone, le monoester étant un monoester d'un acide monocarboxylique comprenant 15 à 20 atomes de carbone avec du glycérol ou avec un monoalcool comprenant ≥ 15 atomes de carbone,
étant entendu que le matériau thermoplastique est exempt de monoesters, de diesters, de triesters et de tétraesters de l'acide stéarique avec du pentaérythritol.

2. Système selon la revendication 1, le monoester se trouvant en une proportion de ≥ 0,01% en poids à ≤ 0,6% en poids, par rapport au poids total du matériau thermoplastique.

3. Système selon l'une des revendications précédentes, le polymère thermoplastique transparent étant un polycarbonate aromatique.

4. Système selon l'une des revendications précédentes, le recouvrement n'atténuant le signal LiDAR que dans une mesure telle que l'intensité du signal de la lumière IR émise par l'unité LiDAR et de nouveau reçue par celle-ci, déterminée par réflexion au niveau d'une surface lisse enduite d'une peinture blanche contenant du TiO₂ à une distance de 3,2 m, est ≥ 80% d'une intensité de référence, qui est déterminée sans recouvrement.

5. Système selon l'une des revendications précédentes, le matériau thermoplastique présentant un coefficient de friction statique, déterminé comme décrit dans le document EP 1 377 812 B1, ≤ 0,37.

6. Système selon l'une des revendications précédentes, présentant en outre une caméra pour de la lumière visible d'une longueur d'onde de 380 nm à 780 nm, la lumière visible reçue par la caméra traversant le recouvrement.

7. Système selon l'une des revendications précédentes, le recouvrement présentant en outre une couche contenant des colorants et/ou des colorants étant contenus dans le matériau thermoplastique, de telle sorte que le recouvrement présente une transmission de la lumière Ty dans la plage de 380 à 780 nm de ≥ 3% à ≤ 25%, déterminée selon la norme DIN ISO 13468-2:2006 (D65, 10°) et les colorants étant au moins un colorant vert et/ou un colorant bleu ainsi qu'au moins un colorant rouge et/ou violet.

8. Système selon l'une des revendications précédentes, le recouvrement présentant en outre une couche de vernis de recouvrement.

9. Système selon la revendication 9, une couche de promoteur d'adhérence étant située entre la couche de vernis de recouvrement et le matériau thermoplastique.

10. Système selon l'une des revendications précédentes, le matériau thermoplastique de la couche décrite dans la revendication 1 contenant, en tant que polymère thermoplastique transparent, uniquement du polycarbonate aromatique, et ne contenant pas d'autres monoesters d'acides carboxyliques que ceux mentionnés.

11. Procédé de fabrication d'un système selon l'une des revendications précédentes, comprenant les étapes de :
- mise à disposition d'un recouvrement, tel qu'il est défini dans l'une des revendications précédentes, fabriqué au moins partiellement dans un procédé de moulage par injection ;
- mise à disposition d'une unité LiDAR pourvue d'un émetteur pour une lumière laser d'une longueur d'onde de 800 nm à 1600 nm et d'un récepteur pour de la lumière d'une longueur d'onde de 800 nm à 1600 nm ;
- agencement du recouvrement, de telle sorte que la lumière IR émise par l'unité LiDAR et reçue par celle-ci traverse le recouvrement.

12. Véhicule comprenant un système selon l'une des revendications 1 à 10.

13. Utilisation d'un matériau thermoplastique pour la fabrication de recouvrements pour des capteurs LiDAR et/ou des récepteurs LiDAR,
**caractérisée en ce que**
le matériau thermoplastique contient un polymère thermoplastique transparent et un monoester d'un acide carboxylique comprenant ≥ 10 atomes de carbone avec un alcool comprenant ≥ 3 atomes de carbone,
étant entendu que le matériau thermoplastique est exempt de monoesters, de diesters, de triesters et de tétraesters de l'acide stéarique avec du pentaérythritol et le monoester étant un monoester d'une acide monocarboxylique comprenant 15-20 atomes de carbone avec du glycérol ou avec un monoalcool comprenant ≥ 15 atomes de carbone.

14. Utilisation selon la revendication 13, le polymère thermoplastique transparent étant un polycarbonate aromatique.
